# EUROPEAN PATENT SPECIFICATION

(11) **EP 1 504 676 B1**
(45) Date of publication and mention of the grant of the patent: **08.11.2006**
(21) Application number: 03425533.1
(22) Date of filing: 04.08.2003
(51) Int. Cl.: A23L 1/212

(54) **Recovery plant of fibres and substances in the tomato-peel**
Sammlungsanlage von Fasern und Substanzen von Tomatenhäuten
Centrale de récupération des fibres et substances de la peau des tomates

(43) Date of publication of application: 09.02.2005
(73) Proprietor: Borchini, Milser, 43040 Varano dè Melegari (Parma) (IT); Alfieri, Carla, 43040 Varano dè Melegari (Parma) (IT); Borchini, David, 43040 Varano dè Melegari (Parma) (IT); Borchini, Denis, 43040 Varano dè Melegari (Parma) (IT); Borchini, Damarys, 43040 Varano dè Melegari (Parma) (IT)
(72) Inventor: Borchini, Milser, 43040 Varano dè Melegari (Parma) (IT); Alfieri, Carla, 43040 Varano dè Melegari (Parma) (IT); Borchini, David, 43040 Varano dè Melegari (Parma) (IT); Borchini, Denis, 43040 Varano dè Melegari (Parma) (IT); Borchini, Damarys, 43040 Varano dè Melegari (Parma) (IT)
(74) Representative: Gotra, Stefano

(56) References cited:
- DATABASE WPI Week 200251 Derwent Publications Ltd., London, GB; AN 2002-472333 XP002268957 & CN 1 343 455 A (JI J)
- DATABASE WPI Week 198837 Derwent Publications Ltd., London, GB; AN 1988-262647 XP002268956 & SU 1 377 008 A (MOLD SPRINKLED AGRI) & SU 1 377 008 A (MOLDAVSK NII OROSHAEMOGO) 28 February 1988 (1988-02-28)
- PATENT ABSTRACTS OF JAPAN vol. 1997, no. 10, 31 October 1997 (1997-10-31) & JP 09 163955 A (KAGOME CO LTD), 24 June 1997 (1997-06-24)
- PATENT ABSTRACTS OF JAPAN vol. 004, no. 166 (C-031), 18 November 1980 (1980-11-18) & JP 55 108282 A (KAGOME KK), 20 August 1980 (1980-08-20)

## Description

In plants processing tomato-based products the worked waste, consisting of seeds, impurities and tomato-peel, is normally discarded. In the working cycle, considering a period of twenty-four hours, this worked waste forms 3% of the worked product total mass. Of this percentage 1.5% represents the seeds and impurities such as molds, dirt and other residuals, while the other 1.5% is formed by tomato-peel. Apparatuses, are known that actuate the recovery of the worked waste in their entirety, i.e. without actuating the separation of these two types of worked waste, resulting in a final product of poor quality. Document CN-1343455 discloses a separating process for the leftover bits and pieces of catsup includes dilution, skin and seed separation and drying. The separating device includes separating pool, agitator, cone goove and pump suction tube at the bottom of separating pool, bleaching pool at the output of pump suction tube. The process efficiently separates out the skin, seed, jelly and residue during the catsup production and uses skin for extracting the red colour element, seeds for extracting vegetable fat and rough made jelly for chemical material. The invention refers to a new working plant able to separate these two types of worked waste and able to regenerate the valuable part thereof: the outside part of the tomato, i.e. the part that forms the peel normally known as tomato-peel. Said peel in fact is made of important substances from the nutritional point of view. It is made te of lycopene, a very important substance which is active against the free radicals, carotone, substances with vitamin content and acting as a natural dye of the final product, and fiber, the nutritional importance of which is well-known.

Moreover the plant of the invention separates and eliminates the seeds, the molds and the impurities from the final product. The seeds contained in the final product are in fact noxious for the conservation process, they are indigestible for the organism and, remaining inside the intestine, irritate the same, while the molds and the impurities, present in the final product, are to be absolutely avoided for hygienic reasons and for product conservation. Moreover, the plant of the invention has an economic return on the investment necessary for actuating the production line such as the cyclic recovery of the material, which is normally eliminated, enabling the plant costs to be ammortised and providing a final product at the end of the work cycle having better quality in comparison with the prior art applications because important substances are recovered from the tomato. The plant provides an Archimedes screw 1 into which the waste to be worked in its entirety is introduced, i..e tomato-peel, seeds, molds and impurities.

Said waste is introduced into said Archimedes screw from the upper inlet 2 and exits from the lower outlet 3. The Archimedes screw 1 is equipped with a hole 4 provided with a pipe 5 for water inlet coming from a closed circuit.

The lower outlet 3 is placed on the upper part of a cyclone 6. In this cyclone, i.e. a big dimension conical container with water inside, the waste falls by force of gravity from the Archimedes screw 1. The waste is thus, in this first phase, separated by type, as the tomato-peels float and stay on the surface, whereas the molds, the impurities and the seeds precipitate onto the bottom. The cyclone 6 so therefore has the task of separating two different kinds of waste. Said cyclone 6 has primary importance in the separation of the two types of waste and its dimensions are in relation to the quantity of product to work. The dimensions, or alternatively the number of the cyclones present on the production line, change consequently on the basis of the quantity of product to work. In an preferred embodiment for a an average work load a second cyclone 6A is provided, also it full of water and connected with the first cyclone 6 by a duct 7 which connects the surface water of the two cyclones with the tomato-peels. In the lower part the cyclones 6 and 6A are equipped with an opening 8 having a collecting water pipe line 9. This pipe line 9 is outwardly connected by means of T pipes 10 and a hand drive valve 11 with flow line 12 to the opened drains 13. The pipe line with T pipes 10 is internally connected to the other end, to the hand drive valves 14 connected to each other with the flow line 15. The T connection 16 is placed in central position with the lower pipe 17 connected to the centrifugal pump 18. The exit of the centrifugal pump 18 is connected, by a pipe 19, to the hand drive valve 20. The exit of said valve is connected, by a pipe 21, to a separation filter 22.

Said filter, by an inside roll riddle, acts to separate the water from the seeds and the impurities that go into a collecting tank 23, whereas the water is recovered into a container 24 and, by a pipe 25, is brought inside a liquid collecting tank 26. Said tank 26 has the function to contain and to redistribute the recovered water during the working of the plant.

The water coming from the separation filter 27 also arrives in this tank.

This filter 27 identical to the separation filter 22, is placed near the upper part of the cyclone 6A, connected with it by a channel 28 and, having like the previous filter an inside roll riddle, to separate the tomato-peels from the water. The action of the roll riddle moreover creates a dragging motion so to generate a surface running of the upper water contained inside the cyclones se in order to drive the tomato-peels towards the filter 27. Inside this filter the separation between tomato-peels and water is actuated. The water fall by force of gravity inside the collecting tank 26. Said tank is equipped with a weep hole 29 with pipe 30 and hand drive valve 31 connected to the opened drain 32.

The hand drive valve 31 is usually closed when the plant is working and it is opened for maintenance or for discharging of the water contained inside the tank 26. The tank 26 is provided with another lower opening 33 connected with pipe 34 to the centrifugal pump 35. This pump, with pipe 36 and hand drive valve 37, is connected to the pipe 5. A closed circuit of water recycling is thus realized. A reusing of the water from the tank 26 is obtained, delivered by the pipes 34, 36 and 5 and by the centrifugal pump 35, to the Archimedes screw 1 so as to limit the costs of plant operating. The tomato-peels, coming from the separator filter 27, separated from the water, arrives on the slanting collecting line 38 to fall into the upper opening 39 of a compacting device 40. Inside this device the tomato-peels are compressed and separated from the resisual water eventually present. The residual water is discharged through the opened drain 41. The compacting device 40 has an outlet 42 at which a collecting tank 43 is placed.

The juice of the tomato arrives in this tank from a tank 44 with pipe 45, hand drive valve 46 and pipe 47.

The juice of the tomato thus arrives inside the tank 43 where the compressed tomato-peels are present. The tomato juice is added in a quantity of 10% in comparison with the total mass of the tomato-peels. The tomato-peels and the tomato juice exit from the lower opening 48 of the container 43 and are pushed by the removal pump 49 to the pipe 50. Said pipe is connected with the T connection 51 by other ends of the pipes 52 and 53.

This last pipe 53 is connected with the hand drive valve 54 and with the opened drain 55. As the hand drive valve 54 is usually closed, the flow formed by the tomato-peels and the tomato juice goes on through the pipe 52 to reach a first disintegrator device 56. In this first disintegrator device the product coming to the pipe 52 is broken up into small pieces until it is about two millimetres average diameter. The flow of tomato-peels and tomato juice reaches, through a pipe 57, a second disintegrator device 58 where it is broken down more finely so as to have an inside average diameter that varies between 150 to 300 micron. This working phase, and the subsequent phases, are necessary to avoid the separation between liquid and solids that will occur in the final product and so as to make the fiber contents extremely digestible.

The broken juice and tomato peel fall by force of gravity, inside the collecting tank 59, then passing, through the lower opening 60, to the transfering pump 61. The flow then arrives in the pipe 62 connected with a T pipe 63. An end of this T pipe is connected to a pipe 64, to a hand drive valve 65 and to the opened drain 66. The other T pipe 63 end is connected to the pipe 67. As said valve is usually closed, the product flow goes on, through the pipe 67, to the deaerator 68. This device sucks the air contained in the peel and in the tomato juice. The deaerator 68 is inferiorly provided with an opening 69 and pipe 70 with T pipe 71. Said T pipe 70 is connected at one end with the pipe 72, hand drive valve 73 and opened drain 74, whereas on the other end it is equipped with pipe 75, hand drive valve 76, another pipe 77 and the product vacuum pump 78. Said pump sends the flow of juice and peel tomato, through pipe 79 and hand drive valve 80, to the homogenizer 81. At the exit of said homogenizer 81 a product is obtained where the separation of the liquids and of the solids that are part of the product is not possible. The so obtained product is brought, by means of the pipe 82, to the production line to reach a concentrator. In the case of non-functioning of the homogenizer 81 a T pipe 83 is provided on the pipe 79 creating a connection to another pipe 84. This last one is connected to an angled safety valve 85 also connected at the other end thereof to the deaerator 68. These components connected to each other are necessary to realize a recycling or return branch so to enable the return of the product inside the deaerator 68.

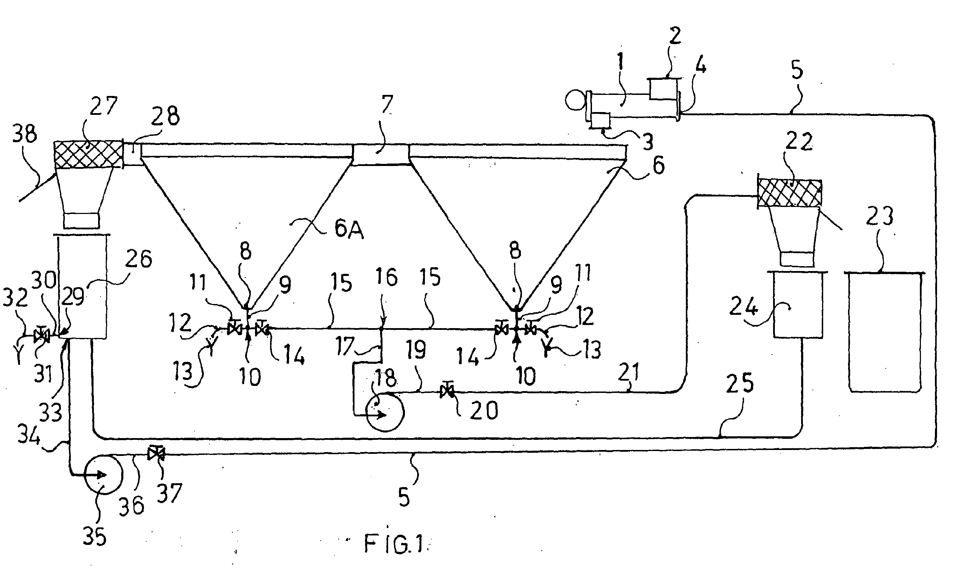

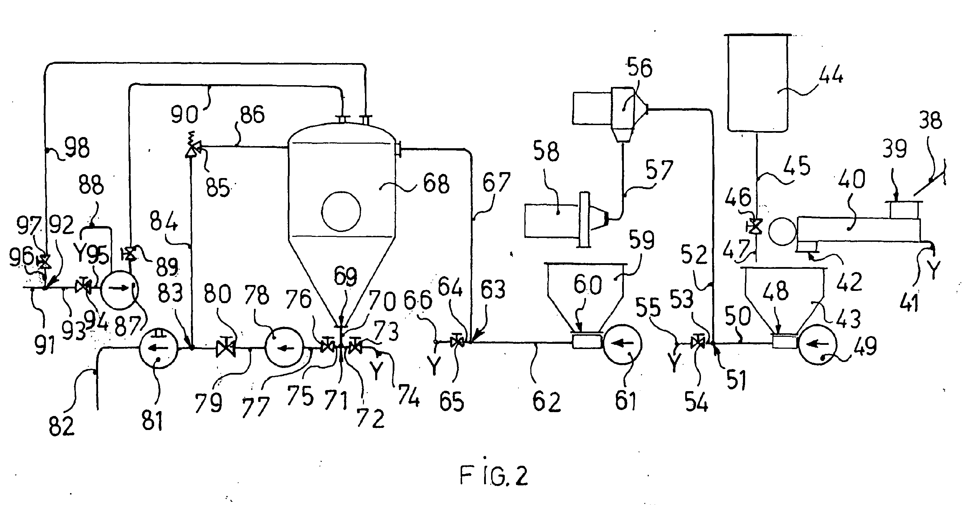

Moreover, for the correct working of the deaerator, the vacuum pump 87 must be connected with the drain 88 and with a valve 89 with a pipe 90 connected to the deaerator. For washing, the deaerator 68 is provided with a pipe connected with the water supply 91 via the T pipe 92 having the other end connected to a pipe 93 and the hand drive valve 94 connected, by means of pipe 96, to the vacuum pump 87. The other end of the T pipe 92 is connected via pipe 96 to the hand drive valve 97 and from this to the pipe 98. The pipe 98 is consequently connected to the deaerator 68. Causing water to come from the pipe 91 and having the valve 94 closed and the valve 97 opened, the washing of the deaerator 68 and of the other parts is actuated. Having instead the valve 97 closed and the valve 94 opened the vacuum pump 87 is supplied. The claimed plant is illustrated in a schematic and indicative way in the drawings of sheets 1 and 2. Figure 1 in sheet 1 shows the first part of the plant up to the slanting collecting line 38. In sheet 2 figure 2 is a view of the second part of the plant.

## Claims

1. Recovery plant of fibres and substances in tomato peel comprising an Archimedes screw (1) having an upper inlet (2) for ingress of a worked waste such as tomato-peels, seeds, molds and impurities and a lower outlet (3) for outlet of said worked waste, said Archimedes screw (1) being further equipped with a hole (4) which is connected to a water inlet pipe (5); **characterized in that** it comprises:
a cyclone (6), suitable for separating the tomato peels from the worked waste, placed under said lower outlet (3) of the Archimedes screw (1) so that the working waste falls from the outlet (3) of the Archimedes screw (1) into said cyclone (6), said cyclone (6) being provided on the bottom with an opening (8) connected to a first separation filter (22) by means of pipe lines (9,15,17,19,21) and hand drive valves (14,20), said first separation filter (22) being suitable for separating a water part from the working waste, said first separation filter (22) being connected to a collecting tank (23) for collecting said working waste separated from water; a second separation filter (27), connected to an upper part of the cyclone (6), which separates the tomato peels from water and which is connected to a slanting collecting line (38), said slanting collecting line (38) connecting said second separation filter (27) to a compacting device (40), said compacting device (40) being connected through an outlet (42), to a collecting tank (43) which is fed with tomato juice, through a pipe (45,46) and a hand drive valve (46);
said collecting tank (43) being provided with a lower opening (48) which is connected, by means of a removal pump (49), to a first disintegrator device (56), where a first disintegration is actuated, and a second disintegration device (58), where a second disintegration is made for then gravitationally falling said second disintegration device (58) being placed above a collecting tank (59) so that the product falls from the second disintegration device (58) into said collecting tank (59);
a deaerator (68), connected to said collecting tank (59) by means of a transfering pump (61), pipes (62,67) and valves, said collecting tank (59) being provided with a lower opening (69) from which the the product, by means of a vacuum pump (78), is sent to a homogenizer (81); said homogenizer (81) being connected through a pipe (82) to a production line provided with a concentrator.

2. Recovery plant of fibres and substances in tomato-peel according to claim 1, **characterized in that** the dimensions and the number of cyclones (6) are chosen on the basis of a quantity of product to work.

3. Recovery plant of fibres and substances in tomato-peel according to claim 1, **characterized in that** it comprises a water collecting tank (26) which is connected to said first and second separation filters (22,27) and which is provided with a lower opening (33) connected, through a pipe (34), to a centrifugal pump (35) which is connected to said water inlet pipe (5).

4. Recovery plant of fibres and substances in tomato-peel according to claim 1, **characterized in that** the first disintegrator device (56) is suitable for breaking the peel/juice product into small pieces having an average diameter smaller or equal than about 2 mm, the second disintegrator device (58) being suitable for breaking the peel/juice product into small pieces having a medium diameter comprised between 150 and 300 micron.

5. Recovery plant of fibres and substances in tomato-peel claim 1, **characterized in that** said homogenizer (81) provides a product in which a separation of the liquid from the solid part is not possible.

## Patentansprüche

1. Sammelanlage für Fasern und Substanzen von Tomatenhäuten, enthaltend eine Archimedes-Schnecke (1) mit einem oberen Einlass (2) für den Eintritt von Verarbeitungsabfall, wie Tomatenhäute, Samen, Schimmelteile und Verunreinigungen, und einen unteren Auslass (3) für den genannten Verarbeitungsabfall, wobei die genannte Archimedes-Schnecke (1) ausserdem eine Öffnung (4) aufweist, an welche eine Wasserzulaufleitung (5) angeschlossen ist, **dadurch gekennzeichnet, dass** sie wie folgt enthält:
- einen Zyklon (6), geeignet zum Trennen der Tomatenhäute von dem Verarbeitungsabfall, angeordnet unter dem unteren Auslass (3) der Archimedes-Schnecke (1), so dass der Verarbeitungsabfall aus dem Auslass (3) der Archimedes-Schnecke (1) in den genannten Zyklon (6) fällt, wobei der genannte Zyklon (6) am Boden mit einer Öffnung (8) versehen ist, angeschlossen an einen ersten Trennfilter (22) mit Hilfe von Rohrleitungen (9, 15, 17, 19, 21) und handbetriebenen Ventilen (14, 20), wobei der genannte erste Trennfilter (22) geeignet ist, einen Wasseranteil von dem Verarbeitungsabfall zu trennen, und wobei der genannte erste Trennfilter (22) an einen Sammelbehälter (23) zum Sammeln des genannten, vom Wasser getrennten Arbeitsabfalls angeschlossen ist;
- einen zweiten Trennfilter (27), angeschlossen an einen oberen Teil des Zyklons (6), welcher die Tomatenhäute vom Wasser trennt, und welcher an eine schräge Sammelleitung (38) angeschlossen ist, wobei die schräge Sammelleitung (38) den genannten zweiten Trennfilter (27) mit einer Kompaktiervorrichtung (40) verbindet, wobei die genannte Kompaktiervorrichtung (40) über einen Auslass (42) an einen Sammelbehälter (43) angeschlossen ist, welcher über eine Rohrleitung (45, 46) und ein handbetriebenes Ventil (46) mit Tomatensaft gespeist wird; wobei der genannte Sammelbehälter (43) mit einer unteren Öffnung (48) versehen ist, verbunden mit Hilfe einer Transferpumpe (49) mit einer ersten Zerkleinerungsvorrichtung (56) und einer zweiten Zerkleinerungsvorrichtung (58), wobei die genannte zweite Zerkleinerungsvorrichtung (58) oberhalb eines Sammelbehälters (59) angeordnet ist, so dass das Produkt aus der zweiten Zerkleinerungsvorrichtung (58) in den genannten Sammelbehälter (59) fällt;
- einen Entlüfter (68), angeschlossen an den genannten Sammelbehälter (59) über eine Transferpumpe (61), Rohre (62, 67) und Ventile, wobei der genannte Sammelbehälter (59) mit einer unteren Öffnung (69) versehen ist, durch welche das Produkt mit Hilfe einer Vakuumpumpe (78) an ein Homogenisiergerät (81) geleitet wird; wobei das genannte Homogenisiergerät (81) über eine Rohrleitung (82) an eine mit einem Konzentrator versehene Produktionsanlage angeschlossen ist.

2. Sammelanlage für Fasern und Substanzen von Tomatenhäuten nach Patentanspruch 1, **dadurch gekennzeichnet, dass** die Abmessungen und die Zahl der Zyklone (6) auf der Basis einer Menge des zu verarbeitenden Produktes gewechselt werden können.

3. Sammelanlage für Fasern und Substanzen von Tomatenhäuten nach Patentanspruch 1, **dadurch gekennzeichnet, dass** sie einen Wassersammelbehälter (26) enthält, welcher an die genannten ersten und zweiten Trennfilter (22, 27) angeschlossen ist, und welcher eine untere Öffnung (33) aufweist, angeschlossen über eine Rohrleitung (34) an eine Schleuderpumpe (35), welche mit der genannten Wasserzuführleitung (5) verbunden ist.

4. Sammelanlage für Fasern und Substanzen von Tomatenhäuten nach Patentanspruch 1, **dadurch gekennzeichnet, dass** die erste Zerkleinerungsvorrichtung (56) geeignet ist zum Brechen des Haut-/Saftproduktes in kleine Teilchen, die einen durchschnittlichen Durchmesser haben, der kleiner als oder gleich 2 mm ist, wobei die zweite Zerkleinerungsvorrichtung (58) geeignet ist zum Brechen des Haut-/ Saftproduktes in kleine Teilchen, die einen durchschnittlichen Durchmesser haben, der zwischen 150 und 300 µ enthalten ist.

5. Sammelanlage für Fasern und Substanzen von Tomatenhäuten nach Patentanspruch 1, **dadurch gekennzeichnet, dass** das genannte Homogenisiergerät (81) ein Produkt vorsieht, in welchem eine Trennung der Flüssigkeit von dem festen Teil nicht möglich ist.

## Revendications

1. Centrale de récupération des fibres et substances de la peau des tomates, comprenant: une vis d'Archimède (1) ayant une entrée supérieure (2) pour l'introduction de déchets de traitement tels que les peaux de tomates, graines, moisissures et impuretés, et une sortie inférieure (3) pour la sortie desdits déchets de traitement, ladite vis d'Archimède (1) étant en outre équipée d'un orifice (4) connecté à un tuyau d'entrée de l'eau; **caractérisée en ce** quelle comprend:
un cyclone (6), apte à séparer les peaux de tomates des déchets de traitement, placé au-dessous de ladite sortie inférieure (3) de la vis d'Archimède (1) de manière à ce que les déchets de traitement tombent de la sortie (3) de la vis d'Archimède (1) dans ledit cyclone (6), ce dernier étant pourvu sur son fond d'une ouverture (8) connectée à un premier filtre de séparation (22) au moyen de circuits de tuyaux (9, 15, 17, 19, 21) et de vannes à commande manuelle (14, 20), ledit premier filtre de séparation (22) étant apte à séparer une parte aqueuse des déchets de traitement, ledit premier filtre de séparation (22) étant connecté à un réservoir de collecte (23) pour collecter lesdits déchets de traitement séparés de l'eau;
un second filtre de séparation (27), connecté à une partie supérieure du cyclone (6), qui sépare les peaux de tomates de l'eau et qui est connecté à un canal de collecte incliné (38), ledit canal de collecte incliné (38) reliant ledit second filtre de séparation (27) à un dispositif de compactage (40), ledit dispositif de compactage (40) étant connecté par l'intermédiaire d'une sortie (42) à un réservoir de collecte (43) alimenté en jus de tomate, par l'intermédiaire d'un tube (45, 46) et une vanne à commande manuelle (46);
ledit réservoir de collecte (43) étant pourvu d'une ouverture inférieure (48) connectée, au moyen d'une pompe d'évacuation (49), à un premier dispositif de désintégration (56), et un second dispositif de désintégration (58), ledit second dispositif de désintégration (58) étant placé au-dessus d'un réservoir de collecte (59) de manière à ce que le produit tombe du second dispositif de désintégration (58) dans ledit réservoir de collecte (59);
un désaérateur (68), connecté audit réservoir de collecte (59) au moyen d'une pompe de transfert (61), des tubes (62, 67) et des vannes, ledit réservoir de collecte (59) étant pourvu d'une ouverture inférieure (69) depuis laquelle le produit, au moyen d'une pompe à vide (78), est envoyé vers un homogénéisateur (81); ledit homogénéisateur (81) étant connecté par l'intermédiaire d'un tube (82) à une ligne de production pourvue d'un concentrateur.

2. Centrale de récupération des fibres et substances de la peau des tomates selon la revendication 1, **caractérisée en ce que** les dimensions et le nombre de cyclones (6) sont choisies sur la base d'une quantité de produit à traiter.

3. Centrale de récupération des fibres et substances de la peau des tomates selon la revendication 1, **caractérisée en ce qu'**elle comprend un réservoir de collecte de l'eau (26) connecté aux dits premier et second filtres de séparation (22, 27) et pourvu d'une ouverture inférieure (33) connectée, par l'intermédiaire d'un tube (34), à une pompe centrifuge (35) connectée audit tube d'entrée de l'eau (5).

4. Centrale de récupération des fibres et substances de la peau des tomates selon la revendication 1, **caractérisée en ce que** le premier dispositif de désintégration (56) est apte à rompre le produit constitué de peau/jus en de petites pièces ayant un diamètre moyen inférieur ou égal à environ 2 mm, le second dispositif de désintégration (58) étant apte à rompre le produit constitué de peau/jus en de petites pièces ayant un diamètre moyen compris entre 150 et 300 microns.

5. Centrale de récupération des fibres et substances de la peau des tomates selon la revendication 1, **caractérisée en ce que** ledit homogénéisateur (81) fournit un produit dans lequel une séparation du liquide de la partie solide n'est pas possible.
